# EUROPEAN PATENT APPLICATION

(11) **EP 4 586 095 A1**
(43) Date of publication of application: **16.07.2025**
(21) Application number: 24151837.2
(22) Date of filing: 15.01.2024
(51) Int. Cl.: G06F 9/54

(54) **INTERFACE FOR SYNCHRONOUS AND ASYNCHRONOUS APPLICATIONS**

(71) Applicant: Barclays Execution Services Limited, London E14 5HP (GB)
(72) Inventor: PANIGRAHI, Jeeban, London, E14 5HP (GB); NOTON, Laurence, London, E14 5HP (GB)
(74) Representative: Carpmaels & Ransford LLP

(57) **Abstract**

There is provided a computer-implemented method of interfacing one or more synchronous batch-driven applications running on a local server with one or more asynchronous event-driven applications running on a cloud computing environment. The method comprises first transformation steps and second transformation steps. The first transformation steps comprise receiving an event-driven message from a first asynchronous event-driven application, the event-driven message having a first data format type; transforming the event-driven message into a second data format type for a first synchronous batch-driven application; and transmitting the transformed event-driven message to the first synchronous batch-driven application. The second transformation steps comprise receiving a batch-driven message from a second synchronous batch-driven application, the batch-driven application having the second data format type; transforming the batch-driven message into the first data format type for a second asynchronous event-driven application; and transmitting the transformed batch-driven message to the second asynchronous event-driven application.

## Description

### Technical Field

The invention relates to a computer-implemented method of interfacing one or more synchronous batch-driven applications running on a local server with one or more asynchronous event-driven applications running on a cloud computing environment. The invention also relates to an interface module, a cloud computing environment, a computer program and a computer-readable medium for implementing the method.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

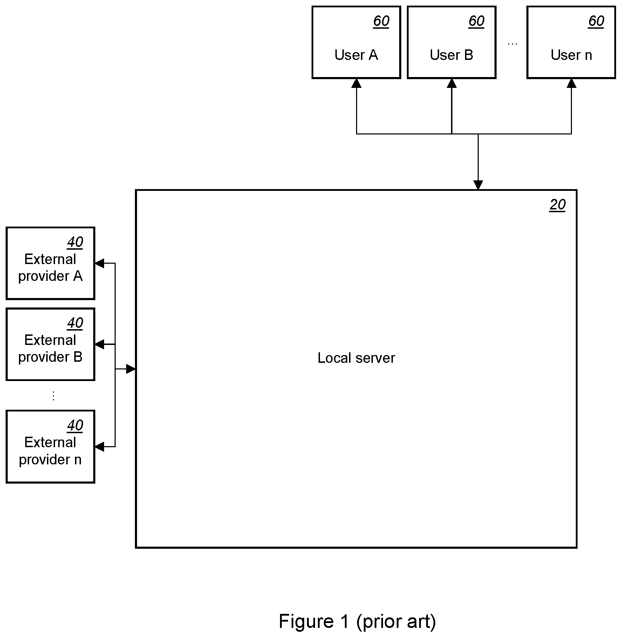

Traditionally, the processing of protected data has been centralised around local servers, as depicted in Figure 1. A local server serves as the focal point responsible for executing protected data processing tasks. These local servers are typically mainframe systems situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the ever-increasing complexity of the data processing landscape, a need has emerged for systems for processing protected data that transcend the limitations of local servers.

### Summary

The present invention is defined by the independent claims, with further optional features being defined by the dependent claims.

In a first aspect of the invention, there is provided a computer-implemented method of interfacing one or more synchronous batch-driven applications running on a local server with one or more asynchronous event-driven applications running on a cloud computing environment, the method comprising: first transformation steps comprising: receiving an event-driven message from a first asynchronous event-driven application, the event-driven message having a first data format type; transforming the event-driven message into a second data format type for a first synchronous batch-driven application; and transmitting the transformed event-driven message to the first synchronous batch-driven application; and second transformation steps comprising: receiving a batch-driven message from a second synchronous batch-driven application, the batch-driven message having the second data format type; transforming the batch-driven message into the first data format type for a second asynchronous event-driven application; and transmitting the transformed batch-driven message to the second asynchronous event-driven application. In this way, not all of the processing of protected data need occur on the local server. Rather, the local server and its legacy batch-driven applications (which are typically mainframe based) are able to communicate to and from a cloud computing environment, which has event-driven applications. This means that the cloud computing environment can be used effectively to process protected data, as well as input and output the necessary data to legacy batch-driven applications on the local server. Cloud computing environments are good at processing protected data due to their robust security measures, including encryption, access controls, and compliance certifications, which help safeguard sensitive information and ensure regulatory compliance while benefiting from scalable and cost-effective processing capabilities.

In embodiments, the method is performed by an interface module. Preferably, in such embodiments, the interface module is running on the cloud computing environment. This means that the advantages associated with using the cloud computing environment, as discussed above, are exacerbated by having the transformation steps running in the cloud computing environment as well. In other embodiments, the interface module is running on the local server. In other embodiments still, the interface module is separate to the local server and the cloud computing environment.

In embodiments, the interface module comprises a first conversion module for interfacing from the cloud computing environment to the local server, the first conversion module configured to perform the first transformation steps. In such embodiments, the first conversion module may comprise one or more of: an outbound to local server API, a fire and forget API, and a file batcher. In such embodiments, the method may further comprise using the outbound to local server API to consume real-time data from the cloud computing environment to provide to the local server, using the fire and forget API to provide a portion of events within the cloud computing environment to the local server, and/or using the file batcher to collect events of the cloud computing environment and consolidate the events into a scheduled batch file to provide to the local server. In this way, data processed, or at least partially processed, in the cloud computing environment is able to be sent to the local server in a format that is appropriate for the batch-driven application on the local server to perform further processing on.

In embodiments, the interface module comprises a second conversion module for interfacing from the local server to the cloud computing environment, the second conversion module configured to perform the second transformation steps. In such embodiments, the second conversion module may comprise one or more of: a file debatcher, and an inbound from local server API. In such embodiments, the method may further comprise using the file debatcher to send batch file data from the local server to the cloud computing environment and/or using the inbound from local server API to consume real-time data from the local server to provide to the cloud computing environment. In this way, data processed, or at least partially processed, at the local server is able to be sent to the cloud computing environment in a format that is appropriate for the event-driven application on the cloud computing environment to perform further processing on.

In embodiments, one or more of the outbound to local server API, the fire and forget API, the file batcher, and the inbound from local server API use HTTPS (Hypertext Transfer Protocol Secure). The primary advantage of using HTTPS is security. HTTPS encrypts the data transmitted between the local server and the cloud computing environment, ensuring confidentiality and integrity. This encryption protects protected data from eavesdropping and tampering during data exchange, enhancing data security and user privacy.

In embodiments, the cloud computing environment comprises one or more domains. The domains provide security boundaries for protected data in the cloud computing environment. These domains may be separate and distinct within the cloud computing environment 10 allowing for the control of access to data based on different security levels. This separation of domains ensures that data is protected and only accessible by authorised users or applications. The domains also modularise the particular processing function or subset of processing functions. Such modular architectures offer advantages such as scalability, reusability, and ease of maintenance. In such embodiments, the one or more domains comprise one or more of: a processing module, a data stream, and a domain database. In embodiments, the cloud computing environment is provided by Amazon Web Services.

In certain embodiments, the event-driven message contains protected data. In additional or alternative embodiments, the batch-driven message contains protected data. In embodiments, the method may further comprise processing protected data in the cloud computing environment using the second asynchronous event-driven application. In such embodiments, the protected data may be comprised in the transformed batch-driven message. In this way, the cloud computing environment is able to receive protected data that has been partially processed at the local server and perform further processing if required. In embodiments, the method may further comprise processing protected data on the local server using the first synchronous batch-driven application. In such embodiments, the protected data may be comprised in the transformed event-driven message. In this way, the local server is able to receive protected data that has been partially processed by the cloud computing environment and perform further processing if required.

In embodiments, the first data format type is a non-relational data format. In such embodiments, the non-relational data format may be JSON. In embodiments, the second data format type is a relational data format. In this way, legacy batch-driven applications on the local server (which is typically a mainframe system), is able to interface event-driven applications in a modern cloud computing environment.

In embodiments, transforming the event-driven message into a second data format type comprises determining whether the first synchronous batch-driven application requires protected data in the event-driven message in real-time. In this way, the appropriate integration pattern (e.g. outbound to local server API, fire and forget API, file batcher) can be utilised according to the needs of the batch-driven application.

In embodiments, transforming the batch-driven message into the first data format type comprises determining whether the second asynchronous event-driven application requires protected data in the batch-driven message in real-time. In this way, the appropriate integration pattern (e.g. file debatcher, inbound from local server API) can be utilised according to the needs of the event-driven application.

In a second aspect of the invention, there is provided an interface module configured to perform the method of the first aspect of the invention.

In a third aspect of the invention, there is provided a cloud computing environment comprising the interface module of the second aspect of the invention.

In a fourth aspect of the invention, there is provided a computer program comprising instructions which, when executed by one or more processors, cause the one or more processors to perform the method of the first aspect of the invention.

In a fifth aspect of the invention, there is provided a computer-readable storage medium comprising instructions which, when executed by one or more processors, cause the one or more processors to perform the method of the first aspect of the invention.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing the invention.
Figure 4A and Figure 4B show an example user device and example external provider system, respectively, that may be used in conjunction with the cloud computing environment-based system of the invention.
Figure 5 shows an example architecture of a cloud computing environment for implementing the invention.
Figure 6A, Figure 6B and Figure 6C show example integration patterns of a cloud computing environment for implementing the invention.
Figure 7 is a diagram showing a method of interfacing between a cloud computing environment and a local server according to the invention.

### Detailed Description

The present disclosure pertains to systems for processing protected data and methods related to processing protected data. Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, secure data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. Typically the local server 20 is a mainframe system. The local server 20 is communicatively coupled to a plurality of user devices 60 (i.e. User A, User B... User n), from which processing requests may be received and to which processing outputs may be sent. Typically, a processing request relates to protected data of the user of the user device 40 that sends the request. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

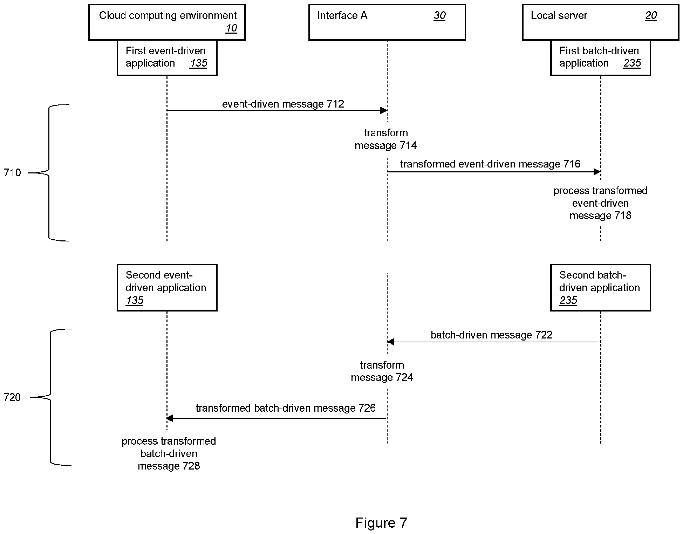

The applications stored by local server 20 are typically batch-driven applications (shown in Figure 7 as batch driven application 235). This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis orwhen a predefined batch size is reached. Batches are often used to efficiently manage and process large volumes of data or perform complex operations that do not require real-time or immediate processing. For this reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, the systems of the invention use a cloud computing environment 10 for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services, Google Cloud or Microsoft Azure, that handle updates and maintenance of the infrastructure.

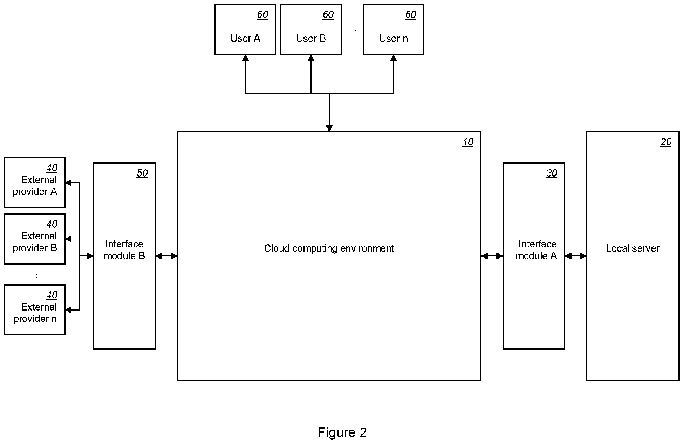

Figure 2 depicts an example system having a cloud computing environment 10 for processing protected data in which the methods of the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

While the plurality of user devices 60 are able to natively couple to the cloud computing environment 10, for example via a dedicated application installed on the user device 60, local server 20 and external provider systems 60 typically contain legacy infrastructure and applications. For example, the local server 20 may be a mainframe system. For this reason the local server 20 and some external provider systems 60 cannot natively be coupled to the cloud computing environment 10. Specifically, unlike local server 20 and external provider systems 60 which use batch-driven applications, cloud computing environment 10 uses event-driven applications, where data is processed as events.

In the context of event-driven applications, an 'event' refers to a discrete and significant occurrence or notification within the cloud computing environment 10 that triggers a specific action or process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

Accordingly, interface modules are provided in the system to couple the local server 20 and the external provider systems 60 with the cloud computing environment 10. Specifically, Figure 2 shows a first interface module (interface module A) 30 that couples the local server 20 to the cloud computing environment 10, and a second interface module (interface module B) 50 that couples the external provider systems 60 to the cloud computing environment 10. Interface module A 30 and interface module B 50 may be outside and separate from the cloud computing environment. However, preferably, the cloud computing environment 10 contains interface module A 30 and interface module B 50. When interface module A 30 and interface module B 50 are provided in the cloud computing environment 10, these interface modules provide communicative coupling to the plurality of user devices 60 and the plurality of external provider systems 40, respectively.

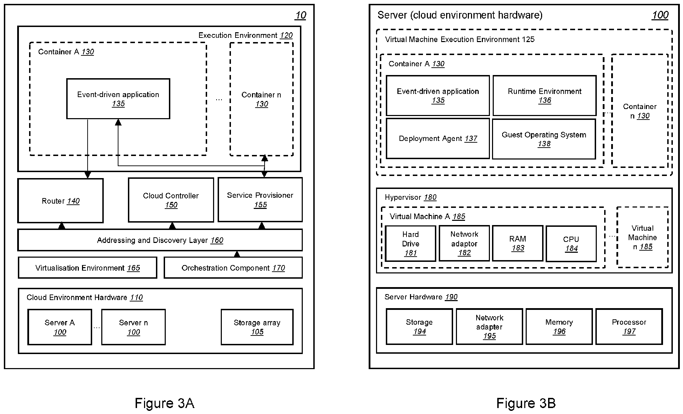

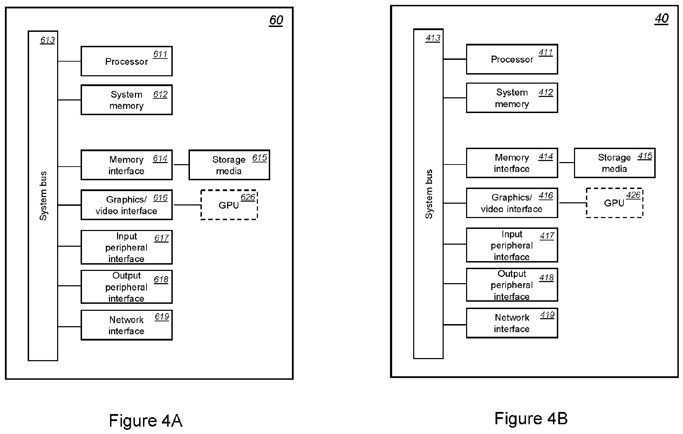

Before providing further details about cloud computing environment 10, interface module A 30, and interface module B 50, the components of cloud computing environment 10, as typically provided by a cloud provider, are discussed with respect to Figure 3A and Figure 3B. Additionally, an example user device 60 and example external provider system are discussed with respect to Figure 4A and Figure 4B.

As shown in Figure 3A, cloud computing environment 10 hosts one or more event-driven applications 135, which are executed in the cloud computing environment 10 for processing protected data that take the form of events. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, a the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware.

As shown in Figure 3B, virtual machine execution environment 125 of server 100 supports a plurality of containers 130. Docker is an example of a virtual machine execution environment 125 which supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

Turning to Figure 4A, an example user device 60 for communicating with the cloud computing environment 10 is shown. User device 60 may be embodied as any type of computer, including a server, a desktop computer, a laptop, a tablet, a mobile device, or the like. Components of user device 60 include, but are not limited to, a processor 611, such as a central processing unit (CPU), system memory 612, and system bus 613. System bus 613 provides communicative coupling for various components of user device 60, including system memory 612 and processor 611. Example system bus architectures include parallel buses, such as Peripheral Component Interconnect (PCI) and Integrated Drive Electronics (IDE), and serial buses, such as PCI Express (PCIe) and Serial ATA (SATA).

System memory 612 is formed of volatile and/or non-volatile memory such as read only memory (ROM) and random-access memory (RAM). ROM is typically used to store a basic input/output system (BIOS), which contains routines that boots the operating system and sets up the components of user device 60, for example at start-up. RAM is typically used to temporarily store data and/or program modules that the processor 611 is operating on.

User device 60 includes other forms of memory, including (computer readable) storage media 615, which is communicatively coupled to the processor 611 through a memory interface 614 and the system bus 613. Storage media 615 may be or may include volatile and/or non-volatile media. Storage media 615 may be or may include removable or non-removable storage media. Examples storage media 615 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 615 may be stored according to known methods of storing information such as program modules, data structures, or other data, the form of which is discussed further herein.

Various program modules are stored on the system memory 612 and/or storage media 615, including an operating system and one or more user applications. Such user applications may cause the user device 60 to interact with cloud computing environment 10. For instance, the user application may cause an event-driven application 135 to begin processing protected data on the cloud computing environment 10.

User device 60 is communicatively coupled to the cloud computing environment 10 via the least one communication network, such as the Internet. Other communication networks may be used including a local area network (LAN) and/or a wide area network (WAN). Further communication networks may be present in various types of user device 60, such as mobile devices and tablets, to cellular networks, such as 3G, 4G LTE and 5G. User device 60 establishes communication through network interface 619.

User device 60 is communicatively coupled to a display device via a graphics/video interface 616 and system bus 613. In some instances, the display device may be an integrated display. A graphical processing unit (GPU) 626 may be used in addition to improve graphical and other types of processing. User device 60 also includes an input peripheral interface 617 and an output peripheral interface 618 that are communicatively coupled to the system bus 613. Input peripheral interface is communicatively coupled to one or more input devices, such as a keyboard, mouse or touchscreen, for interaction between the user device 60 and a user. Output peripheral interface 618 is communicatively coupled to one or more output devices, such as a speaker. When not integrated, the communicative coupling may be wired, such as via a universal serial bus (USB) port, or wireless, such as over Bluetooth.

Figure 4B depicts an example external provider system 40. The components of the external provider system 40 may be the same as those described above for user device 60. In particular, the external provider system 40 may comprise a system bus 413, processor 411, system memory 412, memory interface 414, storage media 415, graphics/video interface 416, GPU 426, input peripheral interface 417, output peripheral interface 418 and network interface 419. In certain embodiments, the external provider system 40 may take the form of an enterprise server.

### Cloud Computing Environment Architecture

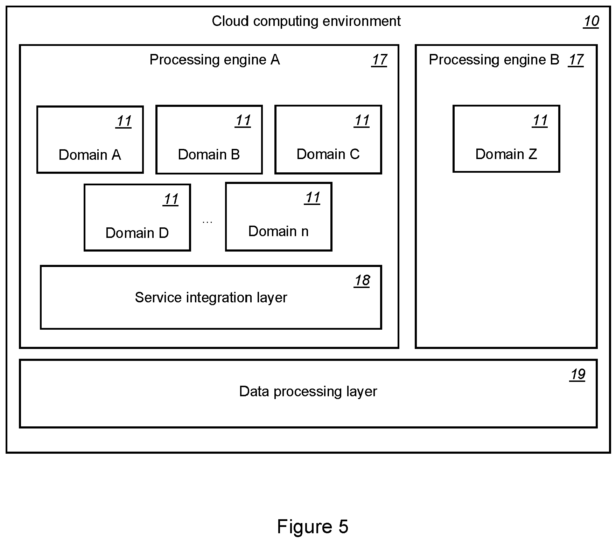

Figure 5 depicts an embodiment of cloud computing environment 10 architecture for implementing the present invention.

As shown in Figure 5, the cloud computing environment 10 contains one or more processing engines 17. Preferably, there are a plurality of processing engines 17. Figure 5 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include DynamoDB, Amazon S3, AWS Lambda, AWS Step Functions, and Amazon API gateway. Optionally, each domain 17 may be composed of one or more sub domains.

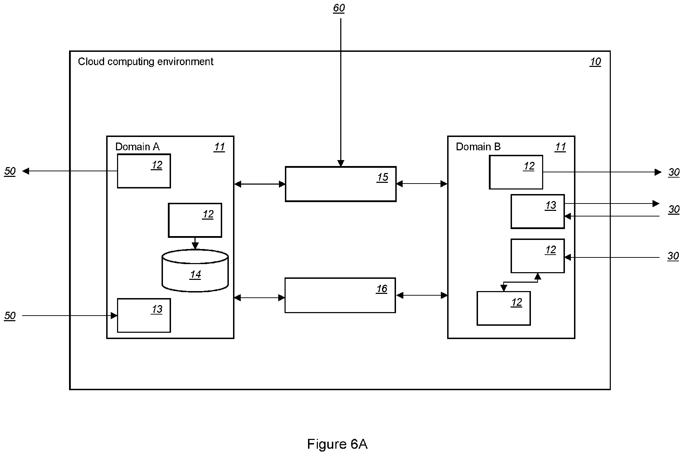

Referring briefly to Figure 6A, each domain 11 contains one or more processing modules 12. The processing modules 12 are event-driven and can be used within one or more event-driven applications 135. Put another way, the processing modules 12 are agnostic to the event-driven applications 135, and therefore may be combined with other components to easily create a new event-driven application 135. This flexibility enables the cloud computing environment 10 to adapt to changing requirements and support a wide range of event-driven applications 135. When the cloud computing environment 10 is an AWS environment, each of the processing modules 12 may be hosted on AWS ECS (Container) running on EC2 or AWS Fargate.

In some examples, the domain 11 may include one or more data streams 13 that are configured to stream protected data. These data streams 13 are event-driven and may have incoming and outgoing connections to various components within the cloud computing environment 10 and outside of the cloud computing environment 10. For instance, within the cloud computing environment 10, the data steams 13 may be used to communicate data to and/or from one or more processing modules 12, one or more domains 11, one or more processing engines 17, one or more databases 14, and the like. Outside of the cloud computing environment 10, the data steams 13 may be used to communicate with local server 20 and/or external provider systems 40. In an AWS environment, such data steams 13 may be provided by Amazon Kinesis, which is a particular type of scalable and durable real-time data streaming application, or another data streaming application.

Each domain 11 may also contain one or more domain databases 14. Domain databases 14 may be used for different reasons, such as to log event processing occurring within the domain 11. In some examples, a database 14 is configured to store protected data. The database 14 may be a NoSQL database, such as DynamoDB, which provides a flexible and scalable approach for storing and managing data. The use of a NoSQL database 14 ensures that the cloud computing environment 10 can efficiently handle large volumes of data and support a wide range of applications.

The one or more processing modules 12, data steams 13, and domain databases 14 work together to provide a scalable, secure, and efficient domain 11 for processing and managing protected data.

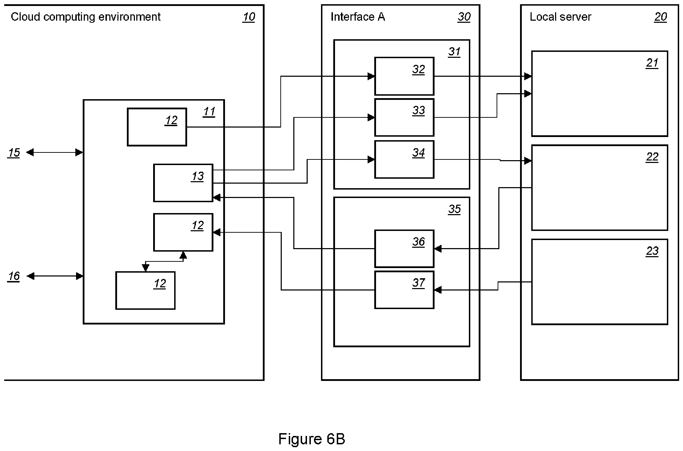

Referring back to Figure 5, processing engine 17 may contain a service integration layer 18. The service integration layer 18 is responsible for communications with local server 20. In particular, the service integration layer 18 uses APIs and/or event streaming patterns (as discussed with respect to Figure 6B) to enable standardisation and scaling for data between the processing engine 17 in the cloud computing environment 10 and the local server 20. Preferably, the service integration layer 18 includes an anti-corruption layer to facilitate integration between local server 20 (which does not support event-driven applications) to the cloud computing environment 10 (which does support event-driven applications) and vice versa.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain 11, i.e. domain Z. Such a domain may be an apply domain that is used so that a new or established user can apply to receive various resources (e.g. financial resources). The apply domain may also be used to on-board new users to the cloud computing environment 10.

Turning back to Figure 5, the cloud computing environment 10 also includes a data processing layer 19. The data processing layer 19 provides a common aggregation point for cloud computing environment 10 for providing data to various data platforms, for further analysis and/or manipulation.

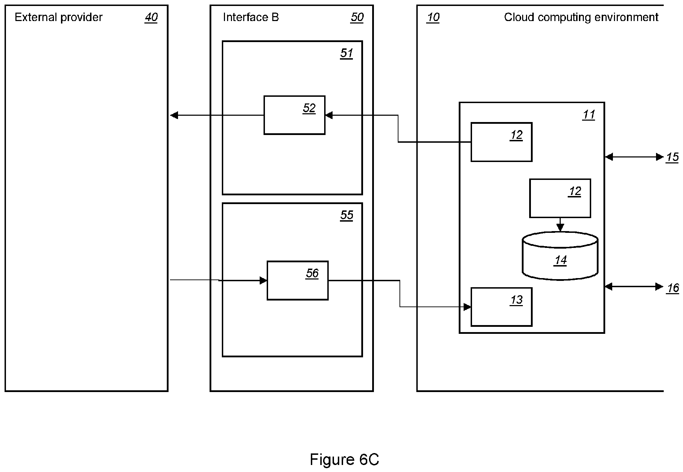

Figure 6A, Figure 6B and Figure 6C show example integration patterns of cloud computing environment 10 for implementing the invention. The integration patterns are a prescribed set of rules for connecting and coordinating different software components to and within the cloud computing environment 10. Such integration patterns particularly assist with data exchange, communication, and interoperability of various applications, including event-driven applications 135 and batch-driven applications. Figure 6A shows integration patterns within cloud computing environment 10 and from user device 60. Figure 6B depicts integration patterns between cloud computing environment 10 and local server 20, whilst Figure 6C shows integration patterns between cloud computing environment 10 and external provider system 40.

Referring first to Figure 6A, two integration patterns are shown. In particular, the cloud computing environment 10 is shown to include a first integration pattern, an inter-domain API (Application Programming Interface) 15. The inter-domain API 15 is configured to connect user devices 60 with one or more domains 11. This inter-domain API 15 allows user devices 60 to access and interact with the cloud computing environment 10, enabling users to, for example, call an application service API exposed by a domain 11 and/or access and manage their protected data securely and efficiently. In particular, this connection allows the user devices 60 to access and interact with the various processing modules 12, data streams 13, and other components within the domains 11.

In some examples, the inter-domain API 15 may provide a secure and efficient communication channel between the user devices 60 and the cloud computing environment 10. This secure communication channel may be established using various security protocols, including HTTPS, and encryption techniques to ensure the confidentiality, integrity, and availability of the data being transmitted between the user devices 60 and the cloud computing environment 10. The inter-domain API 15 may also provide various functionalities and services to the user devices 60, such as authentication, authorisation, data retrieval, data manipulation, and other application-specific operations. By providing these functionalities and services, the inter-domain API 15 enables the user devices 60 to seamlessly interact with the cloud computing environment 10 and perform various tasks and operations within the hosted applications 135.

A second integration pattern, inter-domain message bridge 16, is also shown in Figure 6A. The inter-domain message bridge 16 is positioned between two (or more) domains, and allows events in one domain to be pushed or pulled to another domain. This inter-domain message bridge 16 enables efficient communication and data transfer between domains, ensuring that data is processed and managed securely and efficiently within the cloud computing environment 10. This is particularly advantageous in a cloud computing environment 10 that comprises a plurality of domains 11 with different security boundaries and data processing requirements.

The inter-domain message bridge 16 is designed to support event-driven communication between domains 11, which is a key aspect of the asynchronous event-driven applications 135 hosted within the cloud computing environment 10. By enabling events in one domain 11 to be pushed or pulled (or "published") to another domain 11 as needed, the inter-domain message bridge 16 ensures that the processing modules 12 within the domains 11 can efficiently handle and process the protected data in an event-driven manner. The inter-domain message bridge 16 may be configured to support different event data formats, including NoSQL and JSON, to ensure compatibility with the various processing modules 12 and applications 135 within the cloud computing environment 10.

Reference is now made to Figure 6B, which depicts integration patterns between cloud computing environment 10 and local server 20. Figure 6B provides a more detailed view of the first interface module (interface module A) 30, which includes a first conversion module 31 and a second conversion module 35.

The first conversion module 31 is configured to handle outgoing data from the cloud computing environment 10 to the local server 20, and includes three integration patterns: outbound to local server API 32, fire and forget API 33, and a file batcher 34. The outbound to local server API 32 pattern is used where the local server 20 needs to consume real-time data from the cloud computing environment 10. Fire and forget API 33 is used where some of the events within the cloud computing environment 10 need to be published to the local server 20. File batcher 34 is used to collect events and consolidate the events into a scheduled batch file to provide to the local server 20.

The second conversion module 35 is configured to handle incoming data from the local server 20 to the cloud computing environment 10 and comprises two integration patterns: file debatcher 36 and inbound from local server API 37. File debatcher 36 is used to pass data from the local server, which is typically in the form of a batch file, to the cloud computing environment 10, which is event-driven. The inbound from local server API 37 is used where data is to be passed in real-time from the local server 20 to the cloud computing environment 10.

It is noted that, as shown in Figure 6B, local server 20 may comprise a plurality of partitions, such as a first partition 21, a second partition 22, and a third partition 23. These servers may be responsible for different tasks or functions related to the processing of protected data in synchronous batch-driven applications. Although three partitions are shown in Figure 6B, any number of partitions, including a single partition, may be present at local server 20.

Reference is now made to Figure 6C which shows integration patterns between cloud computing environment 10 and external provider system 40. In particular, Figure 6C provides further details of the second interface module (interface module B) 50, which includes a first conversion module 51 and a second conversion module 55. Each of the conversion modules in the second interface module 50 has its own integration pattern. In particular, the first conversion module 51 is responsible for sending protected data out to the external provider system 40 from the cloud computing environment 10, and therefore has an outbound to external provider API 52. The second conversion module 55 is responsible for receiving data from the external provider system 40 to the cloud computing environment 10, and therefore has an inbox to external provider API 56.

It should be appreciated that the architecture of cloud computing environment 10 of Figure 5 and the integration patterns of Figure 6A, Figure 6B and Figure 6C are merely exemplary. Other architectures and integration patterns may be used for implementing the invention.

### Method of Interfacing

The invention provides a method of interfacing one or more synchronous batch-driven applications 235 running on local server 20 with one or more asynchronous event-driven applications 135 running on cloud computing environment 10. In some implementations, the method of interfacing is between a single synchronous batch-driven application 235 and a single event-driven application 135. In other implementations, the method of interfacing is between a plurality of different synchronous batch-driven applications 235 and a plurality of different event-driven applications 135. The method occurs over the first interface module (i.e. interface A) 30. As previously discussed, the first interface module 30 may be implemented within the cloud computing environment 10 (i.e. running on the cloud computing environment 10), or elsewhere (i.e. running on the local server 20 or separately to the local server 20 and the cloud computing environment 10).

As depicted in Figure 7, the method comprises first transformation steps 710 which relate to interfacing from a first event-driven application 135 at the cloud computing environment 10 to a first batch-driven application at the local server 20, and second transformation steps 720 which relate to interfacing from a second batch-driven application at the local server 20 to a second event-driven application 135 at the cloud computing environment 10. The first transformation steps 710 are implemented by the aforementioned first conversion module 31 of the first interface module 30. The second transformation steps 720 are implemented by the aforementioned second conversion module 35.

In embodiments, the first event-driven application 135 and the second event-driven application 135 are different applications. Additionally or alternatively, the first batch-driven application 235 and the second batch-driven application 235 are different applications. In other words, in such embodiments, there are a plurality of different batch- and/or event-driven applications, and although two-way interfacing is achieved overall, there may only be one-way interfacing between any two applications. In other embodiments, the first event-driven application 135 and the second event-driven application 135 are the same application, and the first batch-driven application 235 and second batch-driven application 235 are also the same application. In such embodiments, there is two-way interfacing between the event-even application 135 and the batch-driven application 235.

In Figure 7, first transformation steps 710 appear to be performed before the second transformation steps 720. However, this is not necessarily the case. The second transformation steps 720 may occur before the first transformation steps 710. What is important is that there is two-way interfacing between the one or more event-driven applications 135 of the cloud computing environment 10 and the one or more batch-driven applications 235 of the local server 20.

Referring now to the first transformation steps 710 of Figure 7, the initial step, step 712, is to receive an event-driven message at the first interface module 30 from the first asynchronous event-driven application 135 of cloud computing environment 10. The event-driven message, as referred to herein, is any data arising from the first event-driven application 135. The event-driven message contains protected data and optionally other data indicating how the protected data is to be processed (e.g., event type, or an indication of destination, either the batch-driven application or a partition of local server 20). At this step, the event-driven message is in a first data format type. The first data format type is the data format used within cloud computing environment 10, i.e. a non-relational data format. Typically, the first data format type is JSON as this is the preferred format for event-driven messages as it offers a flexible schema so that domains 11 and processing modules 12 within the cloud computing environment 10 can be agnostic to the type of event. Notably, the first data format type differs from the first data format. The first data format type indicates the type of data format (e.g. JSON), whilst the first data format is the actual format of the data. A non-limiting example of the first data format when the first data format type is JSON is shown below.

```
          {
            "Records": [
              {
                "EventSource": "aws:sns",
                "Eventversion": "1.0",
                "EventSubscriptionArn": "arn:aws:sns:Example",
                "Sns": {
                  "Type": "Notification",
                  "MessageId": "95df01b4-ee98-5cb9-9903-4c221d41eb5",
                 },
              }
            ]
          }
```

Next, at step 714, the event-driven message is transformed at the first interface module 30 into a second data format type for the first synchronous batch-driven application 235 at the local server 20. Batch-driven applications of local server 20, including the first batch-driven application 235, tend to be legacy applications which are not capable of natively handling non-relational data formats because such applications are based on mainframe technology. As such, the second data format type is a relational data format, such as a database or table. How transforming the event-driven message into a second data format type for a synchronous batch-driven application is performed depends on whether the legacy batch-driven application at the local server 20 needs to receive the protected data within the event-driven message in real-time or not. Accordingly, the step of transforming the event-driven message comprises determining whether the first batch-driven application 235 needs to receive protected data in the event-driven message in real-time. The term "real-time" as used herein means that the protected data is sent to the local server immediately or without intentional delay.

For batch-driven applications that require the protected data in the event-driven message in real-time, the outbound to local server API 32 is used. In contrast, for batch-driven applications that do not require the protected data in the event-driven message in real-time, file batcher 34 is used. File batcher 34 collects events of the cloud computing environment and consolidates the events into a scheduled batch file to provide to the local server 20. The outbound to local server API 32 and file batcher 34 are discussed in further detail below.

Outbound to local server API 32, which is used to send protected data to the local server in real-time, transforms the event-driven message (usually in JSON format) into a relational format for a synchronous batch-driven application. To do this, the outbound to local server API 32 collects event-driven messages via a subscription (e.g. to a particular event type). Then, once one of more of the event-driven messages have been collected, the data in the one or more event-driven messages is parsed and reformatted to a relational format (e.g. a batch file). Techniques for such reformatting are well known in the art and largely depend on the requirements of the target batch-driven application. Finally, the batch data is written to a file (i.e. a batch file) and/or sent as an HTTPS response (i.e. in step 716).

File batcher 34, which is used to send protected data to the local server 20, but not in real-time, transforms the event-driven message (usually in JSON format) into a relational format for a synchronous batch-driven application by receiving a plurality of event-driven messages over a specified period or number of events. Each of the plurality of event-driven messages is transformed into a relational format using a technique known in the art (e.g. that described above with respect to the outbound to local server API 32) and then stored (e.g. at database 14). Once the specified period or number of events has elapsed, the transformed data in the database 14 is aggregated into a batch file. The aggregated data, i.e. the batch file, forms the transformed event-driven message.

Next, at step 716, the transformed event-driven message is transmitted from the first interface module 30 to the first batch-driven application 235 of the local server 20. The event-driven message may contain data indicating to which batch-driven application and/or partition of the local server 20 the transformed event-driven message is to be sent. Alternatively, the event-driven message may contain data indicating the event type, and the first interface module 30 may contain a look-up table indicating to which batch-driven application and/or partition of the local server 20 the particular event type is to be sent to.

Then, at step 718, the protected data contained in the transformed event-driven message is processed by the first batch-driven application 235 on local server 20. As the first batch-driven application 235 processes data as batches, the processing by the first batch-driven application 235 occurs periodically. In this way, the local server 20 is able to receive protected data that has been partially processed in the cloud computing environment 10 and perform further processing if required.

Referring now to the second transformation steps 720 of Figure 7, at step 722, a batch-driven message is received at the first interface module 30 from a second batch-driven application 235 of the local server 20 (which may or may not be the same as the first batch-driven application). The batch-driven message, as referred to herein, is any data arising from the batch-driven application. The batch-driven message contains protected data and optionally other data indicating how the protected data is to be processed (e.g., metadata and other database objects). At this step, the batch-driven message is in the second data format type previously discussed.

Next, at step 724, the batch-driven message is transformed at the first interface module 30 into a first data format type for a second asynchronous event-driven application 135 at the cloud computing environment 10 (which may or may not be the same as the first event-driven application). How the batch-driven message is transformed into the first data format type depends on whether the second event-driven application 135 at the cloud computing environment 10 needs to receive protected data within the batch-driven message in real-time or not. Accordingly, the step of transforming the batch-driven message comprises determining whether the second event-driven application 135 needs to receive any protected data in the batch-driven message in real-time. For event-driven applications that require the protected data in the batch-driven message in real-time, the inbound from local server API 37 is used. In contrast, for event-driven applications that do not require the protected data in the batch-driven message in real-time, file debatcher 36 is used. The inbound from local server API 37 and file debatcher 36 are discussed in further detail below.

File debatcher 36 is used to pass protected data from the local server 20, which is typically in the form of a batch file, to the cloud computing environment 10, not in real-time. Accordingly, file debatcher 36 transforms the batch-driven message into a relational format (preferably JSON) by including an event log table in the batch-driven message. The event-log table is created simultaneously with performing an operation on the protected data forming part of the batch-driven message. The event log table contains event data to be used for publishing events based on the batch-driven message to the cloud computing environment 10. Further details and an example implementation of file debatcher 36 is provided in EP23157644.8.

Inbound from local API 37, which passes protected data to the cloud computing environment 10 in real-time, transforms the batch-driven message into a relational format (preferably JSON) by first reading the batch-driven message using a file read. Then, the data from the batch-driven message is converted into a data structure that can be converted to JSON. This typically involves using a data dictionary to represent the data. Then, the data structure is serialised into a JSON format. Most programming languages provide libraries or functions to convert native data structures to JSON. Finally, JSON data is written to a file and/or sent as a HTTPS response (i.e. in step 726).

Next, at step 726, the transformed batch-driven message is transmitted from the first interface module 30 to the second event-driven application 135 of the cloud computing environment 10. The batch-driven message may contain metadata indicating to which event-driven application and/or domain of the cloud computing environment 10 the transformed batch-driven message is to be sent.

Then, at step 728, the protected data contained in the transformed batch-driven message is processed by the second event-driven application 135 on the cloud computing environment. As the second event-driven application 135 processes data as events, the processing by the second event-driven application 135 occurs once the transformed batch-driven message is received at the cloud computing environment 10. In this way, the cloud computing environment is able to receive protected data that has been partially processed in the local server 20 and perform further processing if required.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method of interfacing one or more synchronous batch-driven applications running on a local server with one or more asynchronous event-driven applications running on a cloud computing environment, the method comprising: first transformation steps comprising: receiving an event-driven message from a first asynchronous event-driven application, the event-driven message having a first data format type; transforming the event-driven message into a second data format type for a first synchronous batch-driven application; and transmitting the transformed event-driven message to the first synchronous batch-driven application; and second transformation steps comprising: receiving a batch-driven message from a second synchronous batch-driven application, the batch-driven message having the second data format type; transforming the batch-driven message into the first data format type for a second asynchronous event-driven application; and transmitting the transformed batch-driven message to the second asynchronous event-driven application.
2. The computer-implemented method of embodiment 1, wherein the method is performed by an interface module.
3. The computer-implemented method of embodiment 2, wherein the interface module is running on the cloud computing environment.
4. The computer-implemented method of embodiment 2, wherein the interface module is running on the local server.
5. The computer-implemented method of embodiment 2, wherein the interface module is separate to the local server and the cloud computing environment.
6. The computer-implemented method of any of embodiments 2-5, wherein the interface module comprises a first conversion module for interfacing from the cloud computing environment to the local server, the first conversion module configured to perform the first transformation steps.
7. The computer-implemented method of embodiment 6, wherein the first conversion module comprises one or more of: an outbound to local server API, a fire and forget API, and a file batcher.
8. The computer-implemented method of embodiment 7, further comprising using the outbound to local server API to consume real-time data from the cloud computing environment to provide to the local server.
9. The computer-implemented method of embodiment 7 or 8, further comprising using the fire and forget API to provide a portion of events within the cloud computing environment to the local server.
10. The computer-implemented method of any of embodiments 7-9, further comprising using the file batcher to collect events of the cloud computing environment and consolidate the events into a scheduled batch file to provide to the local server.
11. The computer-implemented method of any of embodiments 2-10, wherein the interface module comprises a second conversion module for interfacing from the local server to the cloud computing environment, the second conversion module configured to perform the second transformation steps.
12. The computer-implemented method of embodiment 11, wherein the second conversion module comprises one or more of: a file debatcher, and an inbound from local server API.
13. The computer-implemented method of embodiment 12, further comprising using the file debatcher to send batch file data from the local server to the cloud computing environment.
14. The computer-implemented method of embodiment 12 or 13, further comprising using the inbound from local server API to consume real-time data from the local server to provide to the cloud computing environment.
15. The computer-implemented method of any of embodiments 7-14, wherein one or more of the outbound to local server API, the fire and forget API, the file batcher, and the inbound from local server API use HTTPS.
16. The computer-implemented method of any preceding embodiment, wherein the cloud computing environment comprises one or more domains.
17. The computer-implemented method of embodiment 16, wherein the one or more domains comprise one or more of: a processing module, a data stream, and a domain database.
18. The computer-implemented method of any preceding embodiment, wherein the cloud computing environment is provided by Amazon Web Services.
19. The computer-implemented method of any preceding embodiment, wherein the event-driven message contains protected data.
20. The computer-implemented method of any preceding embodiment, wherein the batch-driven message contains protected data.
21. The computer-implemented method of any preceding embodiment, further comprising processing protected data in the cloud computing environment using the second asynchronous event-driven application.
22. The computer-implemented method of embodiment 21, wherein the protected data is comprised in the transformed batch-driven message.
23. The computer-implemented method of any preceding embodiment, further comprising processing protected data on the local server using the first synchronous batch-driven application.
24. The computer-implemented method of embodiment 23, wherein the protected data is comprised in the transformed event-driven message.
25. The computer-implemented method of any preceding embodiment, wherein the first data format type is a non-relational data format.
26. The computer-implemented method of embodiment 25, wherein the non-relational data format is JSON.
27. The computer-implemented method of any preceding embodiment, wherein the second data format type is a relational data format.
28. The computer-implemented method of any preceding embodiment, wherein transforming the event-driven message into a second data format type comprises determining whether the first synchronous batch-driven application requires protected data in the event-driven message in real-time.
29. The computer-implemented method of any preceding embodiment, wherein transforming the batch-driven message into the first data format type comprises determining whether the second asynchronous event-driven application requires protected data in the batch-driven message in real-time.
30. An interface module configured to perform the method of any of embodiments 1-29.
31. A cloud computing environment comprising the interface module of embodiment 30.
32. A computer program comprising instructions which, when executed by one or more processors, cause the one or more processors to perform the method of any of embodiments 1-29.
33. A computer-readable storage medium comprising instructions which, when executed by one or more processors, cause the one or more processors to perform the method of any of embodiments 1-29.

## Claims

1. A computer-implemented method of interfacing one or more synchronous batch-driven applications running on a local server with one or more asynchronous event-driven applications running on a cloud computing environment, the method comprising:
first transformation steps comprising:
receiving an event-driven message from a first asynchronous event-driven application, the event-driven message having a first data format type;
transforming the event-driven message into a second data format type for a first synchronous batch-driven application; and
transmitting the transformed event-driven message to the first synchronous batch-driven application; and
second transformation steps comprising:
receiving a batch-driven message from a second synchronous batch-driven application, the batch-driven message having the second data format type;
transforming the batch-driven message into the first data format type for a second asynchronous event-driven application; and
transmitting the transformed batch-driven message to the second asynchronous event-driven application.

2. The computer-implemented method of claim 1, wherein the method is performed by an interface module running on the cloud computing environment.

3. The computer-implemented method of claim 2, wherein the interface module comprises a first conversion module for interfacing from the cloud computing environment to the local server, the first conversion module configured to perform the first transformation steps.

4. The computer-implemented method of claim 3, wherein the first conversion module comprises one or more of: an outbound to local server API, a fire and forget API, and a file batcher.

5. The computer-implemented method of any of claims 2-4, wherein the interface module comprises a second conversion module for interfacing from the local server to the cloud computing environment, the second conversion module configured to perform the second transformation steps.

6. The computer-implemented method of claim 5, wherein the second conversion module comprises one or more of: a file debatcher, and an inbound from local server API.

7. The computer-implemented method of any of claims 4-6, wherein one or more of the outbound to local server API, the fire and forget API, the file batcher, and the inbound from local server API use HTTPS.

8. The computer-implemented method of any preceding claim, further comprising processing protected data in the cloud computing environment using the second asynchronous event-driven application, wherein the protected data is comprised in the transformed batch-driven message.

9. The computer-implemented method of any preceding claim, further comprising processing protected data on the local server using the first synchronous batch-driven application, wherein the protected data is comprised in the transformed event-driven message.

10. The computer-implemented method of any preceding claim, wherein the first data format type is a non-relational data format, optionally wherein the non-relational data format is JSON.

11. The computer-implemented method of any preceding claim, wherein the second data format type is a relational data format.

12. An interface module configured to perform the method of any of claims 1-11.

13. A cloud computing environment comprising the interface module of claim 12.

14. A computer program comprising instructions which, when executed by one or more processors, cause the one or more processors to perform the method of any of claims 1-11.

15. A computer-readable storage medium comprising instructions which, when executed by one or more processors, cause the one or more processors to perform the method of any of claims 1-11.
